# DEMANDE DE BREVET EUROPEEN

(11) **EP 4 803 921 A1**
(43) Date de publication de la demande: **09.09.2026**
(21) Numéro de dépôt: 26162431.6
(22) Date de dépôt: 04.03.2026
(51) Int. Cl.: G01S 7/292, G01S 7/41, G01S 7/487, G01S 13/52, G01S 13/72, G01S 13/95

(54) **PROCÉDÉ, MIS EN OEUVRE PAR ORDINATEUR, D'IDENTIFICATION DE SPIKE DANS UNE LISTE DE PLOTS PRIMAIRES; PROGRAMME D'ORDINATEUR ASSOCIÉ**

(30) Priorité: 06.03.2025 FR 2502254
(71) Demandeur: THALES, 92190 Meudon (FR)
(72) Inventeur: GOY, Philippe, 33700 MERIGNAC (FR); KEMKEMIAN, Stéphane, 78995 ELANCOURT (FR); LEGRAND, Léo, 33700 MERIGNAC (FR); COTTRON, Rodolphe, 33700 MERIGNAC (FR)
(74) Mandataire: Lavoix

(57) **Abrégé**

Ce procédé consiste à :élaborer (210) au moins un histogramme (H_k) de variation temporelle de position pour une pluralité de paires de plots, chaque paire associant un plot à l'instant courant et un plot à un instant précédent localisés à l'intérieur d'une macro cellule (MC_i) ; pour un plot à l'instant courant considéré comme « plot sous test », agréger (226), dans un histogramme étendu (HE), les histogrammes des plots à l'instant courant localisés à l'intérieur d'une macro-cellules étendue (MCE) autour du plot sous test ;appliquer (228) un critère d'identification de spike sur l'histogramme étendu.

## Description

L'invention a pour domaine celui des procédés de contrôle automatique des fausses alarmes, mis en œuvre dans une chaine de traitement des signaux radar, notamment pour la détection de cibles dans des missions de surveillance maritime.

Une chaine de traitement classique est fondée sur la mise en œuvre d'un module de détection (ou détecteur), comme un détecteur à taux de fausse alarme constant - TFAC (« constant false alarm rate » en anglais).

A ce détecteur est adjoint un ou plusieurs modules de traitements additionnels permettant de confirmer, parmi les plots primaires issus du détecteur (aussi dénommés détections primaires), les plots correspondant à un objet d'intérêt (ou plots confirmés).

Par exemple, un extracteur cinématique est mis en œuvre pour réaliser un traitement balayage à balayage permettant de filtrer les plots primaires sur plusieurs revisites d'une région du domaine observé par le système radar durant un certain intervalle de temps afin de confirmer la présence d'un objet d'intérêt.

Par exemple, le document FR1871763 décrit un traitement d'intégration tour à tour multi-dimensionnel fondé sur la construction d'histogrammes de pentes (distance, azimut, etc.) pour confirmer les plots correspondant à des cibles et éliminer par filtrage temporel les fausses alarmes.

L'utilisation d'un extracteur en sortie de détecteur permet ainsi de baisser les seuils de détection tout en maitrisant le nombre de fausses alarmes.

Des cibles de petites SER, au plus proche du bruit ambiant « moyen », peuvent être détectées.

Dans la suite, on parle alors de pré-détections ou de plots primaires en sortie de détecteur et de détections ou de plots confirmés en sortie de l'extracteur.

Un plot, primaire ou confirmé, rassemble des informations dérivées des échos radar collectés par le système radar, comme une position, une surface équivalente radar, etc. Si le système radar possède un mode Doppler, un plot peut également contenir une information de vitesse radiale.

En aval de ces traitements de détection au sens large, la chaine de traitement comporte un module de pistage de cible, dont le but est d'assurer le suivi au cours du temps des objets d'intérêt à partir des plots confirmés. Ce module estime les caractéristiques cinématiques d'une cible comme sa position, sa vitesse, etc. Cette estimation est par exemple réalisée par un algorithme d'estimation du type filtre de Kalman.

Le module de pistage de cible produit par exemple une estimation de trajectoire à l'attention d'un opérateur du système radar ou du système de mission. Par exemple, cette trajectoire estimée est affichée sur une interface homme machine du système.

Parmi les plots (primaires ou confirmés), certains d'entre eux correspondent effectivement à des cibles, alors que d'autres correspondent à des fausses alarmes. Il s'agit de pics de puissance imputés soit au bruit thermique, soit à des échos radar issus d'un fouillis (sol, mer, atmosphérique).

Dans le cadre de la surveillance maritime, le fouillis de mer, constitué des rétrodiffusions du signal radar par la surface de la mer, est un grand pourvoyeur de fausses alarmes.

En particulier, des échos du fouillis de mer dont la puissance est comparable à celle des objets d'intérêt apparaissent à la surface de la mer.

Un tel écho de forte puissance est dénommé « spike ».

Le nombre de spikes dépend en fait de la sensibilité du détecteur.

Un spike apparaît dès qu'un écho du fouillis de mer présente un contraste supérieur au seuil de détection utilisé par le détecteur. Le contraste est une mesure de la puissance d'une case distance / récurrence sous test par rapport à l'ambiance environnante, par exemple la puissance moyenne autour de la case sous test.

Ceci est d'autant plus problématique lorsque le seuil de détection est bas et que l'ambiance est dominée par le bruit thermique ou lorsque la puissance moyenne de fouillis est proche de celle du bruit thermique.

Les spikes rentrent alors en compétition avec les objets d'intérêt dans les traitements qui suivent les traitements de détection, notamment le pistage de cible.

La régulation du taux d'occurrence des fausses alarmes est alors un défi majeur dans la conception des traitements radar.

Divers évènements physiques peuvent être à l'origine de ces spikes comme la cassure des vagues, des vagues qui se brisent sur des hauts fonds, des courants d'eau allant dans des directions différentes, des bourrasques de vent, etc. Bien que visibles en haute mer, ces phénomènes sont encore plus nombreux en zone littorale.

Selon la nature du phénomène engendrant des spikes, ceux-ci présentent des propriétés de persistance, d'apparition, de stationnarité, de vitesse spécifiques.

Pourtant ces propriétés présentent une telle variabilité qu'il reste difficile de concevoir un traitement adapté capable de séparer un spike d'une cible, en particulier en présence d'un fouillis de mer qualifié d'atypique.

Des procédés connus de contrôle des fausses alarmes se fondent sur une modélisation statistique du phénomène d'occurrence des spikes. Certaines modélisations statistiques classiques du fouillis de mer emploient une loi « à queue lourde », comme la loi K ou ses variantes plus élaborées multi-paramètres « KK » et « KA », pour représenter les probabilités d'apparition des spikes.

La loi K permet de modéliser un comportement « moyen » du fouillis de mer, avec une sous-évaluation de la probabilité d'apparition des spikes et leur niveau de puissance.

Les variantes plus élaborées (mais plus difficiles à manipuler car introduisant plus de paramètres statistiques) permettent de mieux modéliser l'apparition des spikes de très forte puissance.

Il s'agit ensuite de remonter les seuils de détection pour maintenir le taux d'occurrence des fausses alarmes sous une valeur de consigne.

Cependant, cela se fait au détriment de la détection des cibles d'intérêt.

Une autre approche consiste à exploiter la cohérence cinématique des cibles par rapport aux spikes, qui sont supposés être moins persistants dans le temps que les cibles, l'idée étant de pouvoir ainsi maintenir les seuils de détection à des niveaux suffisamment faibles pour permettre la détection des cibles d'intérêt.

L'extracteur cinématique vise ainsi à exclure les plots primaires correspondant à des spikes selon un critère complémentaire à celui de la puissance du signal renvoyé.

Il s'agit donc de proposer des procédés alternatifs permettant le maintien des capacités de détection du système radar par l'application de traitements et de seuils de détection adaptés à des environnements de fouillis de mer variés, tout en contrôlant le taux d'occurrence des fausses alarmes global constant.

Le but de l'invention est alors de répondre à ce problème.

A cet effet, l'invention a pour objet un procédé mis en œuvre par ordinateur, d'identification de spike dans une liste de plots primaires à l'instant courant, un plot primaire correspondant à une sortie d'un procédé de traitement de détection opérant sur un signal radar délivré par un système radar d'observation maritime, le procédé étant caractérisé en ce qu'il comporte les étapes de : élaborer au moins un histogramme de variation temporelle de position pour une pluralité de paires de plots primaires, chaque paire de plots primaires associant un plot primaire courant appartenant à la liste de plots primaires à l'instant courant et un plot primaire précédent appartenant à une liste de plots primaires à un instant précédent, les plots primaires courant et précédent d'une paire de plots primaires étant localisés à l'intérieur d'une macro cellule ; pour un plot primaire courant considéré comme « plot primaire sous test », agréger, dans un histogramme étendu, les histogrammes d'un groupe de plots primaires courants, les plots primaires courants du groupe de plots primaires étant localisés à l'intérieur d'une macro-cellules étendue autour du plot primaire sous test ; appliquer un critère d'extraction de spike sur l'histogramme étendu, en considérant que lorsqu'un niveau de l'histogramme étendu dépasse un seuil de spike, le plot primaire sous test est considéré comme un spike ; et placer chaque plot primaire courant considéré comme un spike dans une liste de spikes à l'instant courant.

Suivant d'autres aspects avantageux de l'invention, le procédé comprend une ou plusieurs des caractéristiques suivantes, prises isolément ou suivant toutes les combinaisons techniquement possibles :
- le procédé comporte une étape consistant à appliquer un critère d'extraction de cible sur ledit au moins un histogramme de variation temporelle de position, en considérant que, lorsqu'un niveau de l'histogramme dépasse un seuil de cible sur un intervalle de variation temporelle de position, le ou chaque plot primaire courant associé audit intervalle est une cible et à placer chaque plot primaire courant considéré comme une cible dans une liste de cibles à l'instant courant ;
- un plot primaire sous test est un plot primaire courant de la liste de plots primaires à l'instant courant qui n'appartient pas à la liste de cibles à l'instant courant ;
- un spike est un phénomène à la surface de la mer qui donne lieu à un ou plusieurs échos radar puissants, ces échos radar conduisant à la génération de plots primaires par le procédé de traitement de détection ;
- l'identification de spike est fondée sur l'hypothèse que les spikes résultent d'un ou plusieurs trains de houle ;
- le procédé comporte une étape de filtrage de la liste de cibles à l'instant courant avec la liste de spikes à l'instant courant pour obtenir une liste de plots confirmés ;
- chaque plot de la liste de spikes présente une vraisemblance d'être un spike supérieure à un seuil de coupure prédéfini ;
- le procédé comporte une étape de détermination d'au moins un paramètre d'un train de houle à partir des plots de la liste de spikes, ledit au moins un paramètre étant une vitesse de vague ou une direction de propagation de vague ;
- le procédé comporte une étape de génération d'une cartographie d'un domaine observé par le système radar, ladite cartographie indiquant, pour chaque zone d'une pluralité de zones subdivisant le domaine d'observation du système radar, chaque zone associant une pluralité de macro cellules étendues, une estimation d'un état de mer et/ou un état de vent à partir du ou des paramètres du train de houle déterminés à l'intérieur de ladite zone ;
- l'histogramme de variation temporelle de position est soit un histogramme unidimensionnel selon la direction de distance ou selon la direction en azimut soit un histogramme bidimensionnel selon la direction de distance et la direction en azimut.

L'invention concerne également un programme d'ordinateur comportant des instructions logicielles qui, lorsqu'elles sont exécutées par un ordinateur, mettent en œuvre un procédé tel que défini ci-dessus.

L'invention apparaîtra plus clairement à la lecture de la description détaillée qui va suivre, donnée uniquement à titre d'exemple non limitatif, et faite en référence aux dessins dans lesquels :
- la figure 1 est une représentation schématique, sous forme de modules fonctionnels, d'une chaine de traitement des signaux radar, mettant en œuvre le procédé selon l'invention ;
- la figure 2 est une représentation schématique permettant d'illustrer la situation opérationnelle pour la mise en œuvre du procédé selon l'invention ;
- la figure 3 est une représentation schématique des étapes de construction, par un extracteur cinématique de cible, d'un histogramme de pente pour une macro-cellule ;
- la figure 4 est une représentation schématique des étapes de construction, par un extracteur cinématique de spike, d'un histogramme de pente combiné pour une macro-cellule étendue ; et,
- la figure 5 est une représentation schématique sous forme de blocs d'un mode de réalisation préféré d'un procédé d'extraction de spike selon l'invention.

Dans la présente demande, le terme de « spike » est utilisé pour désigner un phénomène à la surface de la mer qui donne lieu à un ou plusieurs échos radar puissants (c'est-à-dire à un ou plusieurs pics impulsionnels), ces échos radar faisant l'objet d'autant de détections par le détecteur de la chaine de traitement du signal radar (c'est-à-dire à la génération au cours du temps de plots primaires en sortie du détecteur). Un spike est donc ici un objet détectable (un réflecteur élémentaire), tout comme une cible.

Les traitements de l'état de la technique ne considèrent pas le fouillis de mer dans sa physique sous-jacente.

Mais, en faisant l'hypothèse qu'ils résultent d'un ou plusieurs trains de houle à la surface de la mer, les spikes doivent présenter une certaine corrélation entre eux, par exemple sur leur vitesse et leur déplacement au cours du temps.

Le procédé selon l'invention se fonde sur l'agrégation, sur des macro cellules voisines, de plusieurs histogrammes réalisés par un extracteur cinématique tour à tour, afin de faire ressortir une valeur de pente correspondant à un phénomène de spike.

La sortie de l'algorithme selon l'invention est par conséquent une liste de plots ayant une forte probabilité d'être des spikes et, avantageusement, des caractéristiques additionnelles, comme des valeurs de vitesse et de direction observées.

Cette liste de spikes peut être utilisée de diverses manières, notamment pour filtrer la liste de cibles en sortie de l'extracteur tour à tour, pour obtenir une liste de plots confirmés.

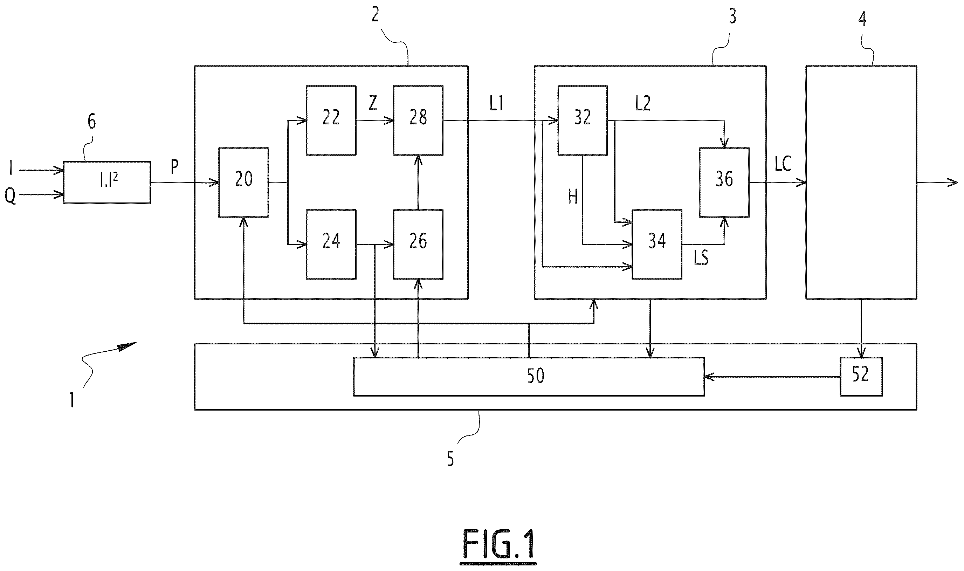

La figure 1 représente, sous forme de blocs fonctionnels, un mode de réalisation préféré d'une chaine de traitement 1 des signaux radar, en vue de la détection et du pistage de cibles, cette chaine de traitement étant adaptée pour mettre en œuvre le procédé selon l'invention.

La chaîne de traitement 1 est spécifique à l'emploi d'un système radar dans un contexte de surveillance maritime, le système radar étant alors embarqué à bord d'un aéronef.

La chaîne de traitement 1 prend en entrée un signal radar brut avantageusement prétraité (module de prétraitement 6 sur la figure 1). Le signal radar brut est généralement constitué d'un signal complexe représenté par ses composantes en phase, notée I, et en quadrature, notée Q. Un prétraitement usuel consiste à calculer la puissance de ce signal numérisé, notée P après traitement adapté à la forme d'onde radar.

La chaine de traitement 1 comporte :
- un détecteur 2, qui prend en entrée la puissance P du signal numérisé pour produire, à chaque pas d'échantillonnage, une liste de détections ou plots primaires, L1.
- un module de caractérisation des fausses alarmes 3, qui prend en entrée la liste de plots primaires L1 et délivre en sortie une liste de détections confirmées, ou plots confirmés, LC ; et,
- un module de pistage de cibles 4, prenant en entrée la liste de plots confirmés LC pour pister une ou plusieurs cibles d'intérêt.

Avantageusement, la chaine de traitement 1 comporte une boucle de rétroaction, prenant la forme d'un module 5 de calcul d'indicateurs globaux de fouillis de mer.

Le détecteur 2 est par exemple un détecteur à taux de fausse alarme constant - TFAC.

L'invention n'est pas spécifique d'un détecteur TFAC et s'applique à la suite de tout traitement de détection délivrant une liste de plots primaires.

Dans le cas d'un détecteur TFAC, le détecteur 2 comporte, de manière connue en soi, par exemple :
- un module 20 de moyenne du bruit ambiant ;
- un module 22 de calcul du contraste Z ;
- un module 24 de caractérisation locale du bruit ;
- un module 26 de recherche du seuil adapté ; et,
- un module 28 de seuillage.

Notamment, le module 28 de seuillage génère un plot primaire lorsque la valeur du contraste Z d'une case distance / récurrence sous test (telle que calculée en sortie du module 22) est supérieure au seuil de détection courant (tel que défini par le module 28 de seuillage).

Un plot primaire rassemble une pluralité d'informations mesurées. Il s'agit généralement d'une mesure de position, d'une mesure de surface équivalente radar, d'une mesure du rapport signal à ambiance, d'une valeur du seuil de détection associé, etc.

Eventuellement, la pluralité d'informations d'un plot primaire comporte une mesure de vitesse radiale lorsque celle-ci est mesurable sur la forme d'onde (c'est-à-dire lorsque le système radar emploie un mode Doppler)

Le module de caractérisation des fausses alarmes 3 met en œuvre un ou plusieurs traitements permettant de contrôler les fausses alarmes en filtrant la liste des plots primaires pour chercher à confirmer chacun de ces plots, c'est-à-dire à augmenter la probabilité qu'un plot primaire corresponde effectivement à une cible.

Par exemple, le module 3 comporte un module 32 mettant en œuvre un traitement de balayage à balayage, aussi appelé traitement d'intégration tout à tour - ITT, pour filtrer la liste L1 de plots primaires et délivrer une liste L2 de plots secondaires ayant une forte probabilité d'être des cibles, ou liste de cibles.

Le traitement de balayage à balayage permet, par exemple, de filtrer les plots primaires issus du TFAC sur plusieurs revisites et aboutissant à la désignation de plots confirmés.

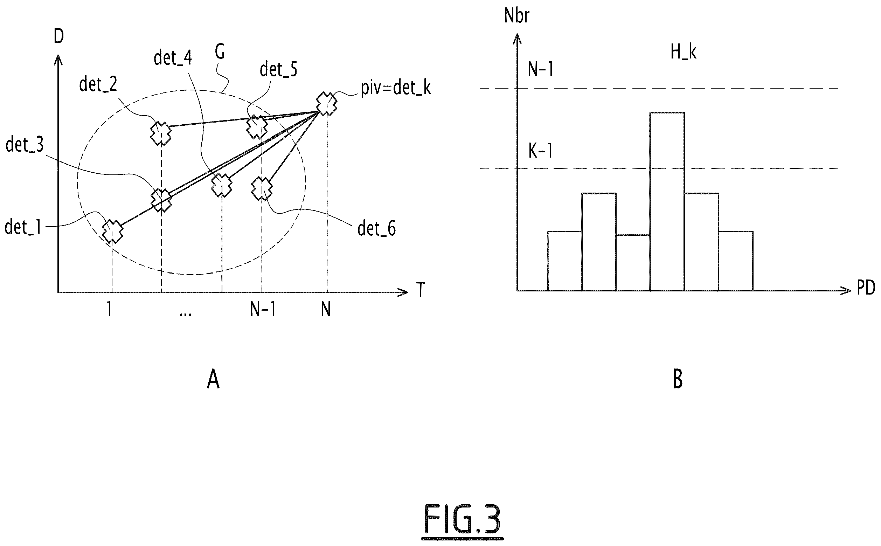

Le traitement de balayage à balayage mis en œuvre par le module 32 est un extracteur cinématique du type de celui présenté dans le document FR1871763. Un tel extracteur cinématique est adapté pour construire, en tant qu'intermédiaires de calcul, des histogrammes de pente. Le détail du fonctionnement d'un tel extracteur cinématique est indiqué ci-dessous en relation avec la figure 3.

Selon l'invention, le module 3 comporte un module d'identification de spikes 34 propre à délivrer une liste de plots secondaires ayant une forte probabilité d'être des spikes ou liste de spikes, LS.

Dans le mode de réalisation de la figure 1, le module 34 prend en entrée la liste des plots primaires L1, la liste de cibles L2, et une pluralité d'histogrammes H, calculés par le module 32.

Dans le mode de réalisation présenté en détail, le module 3 comporte un module de confirmation 36 permettant de filtrer une liste de plots en fonction des plots appartenant à la liste de spikes LS de manière à obtenir la liste LC des plots confirmés.

Dans le mode de réalisation de la figure 1, la liste de plots qui est filtrée est la liste L2 des plots secondaires, mais, en variante, il pourrait s'agir de la liste L1 des plots primaires.

En sortie de la fonction de détection au sens large (détection et contrôle des fausses alarmes), la chaine de traitement 1 comporte généralement des fonctions supplémentaires de traitement de l'information, comme le pistage de cible, dont l'objectif est par exemple de produire un visuel à l'attention de l'opérateur du système radar ou du système de mission.

Ainsi, comme représenté sur la figure 1, la chaine de traitement 1 comporte un module de pistage de cible 4 dont le but est d'assurer le suivi des objets d'intérêt au cours du temps à partir de la liste des plots confirmés LC. Le pistage de cible peut également assurer, par filtrage (du type filtre de Kalman), l'estimation des caractéristiques cinématiques des pistes de cible, i.e. des objets d'intérêt, comme la position et la vitesse.

Le module 5 comporte par exemple un module 52 de calcul d'indicateurs de densité de cibles à partir d'information fournies par le module de pistage de cible 4.

Le module 5 comporte par exemple un module de calcul d'indicateurs globaux de fouillis de mer 50 à partir d'informations fournies en sortie du module 52 de calcul d'indicateurs de densité de cibles, du module 24 de caractéristiques locales du bruit, et/ou du module de calcul de la fausse alarme 3.

Les indicateurs globaux relatifs au fouillis calculés par le module 50 sont par exemple transmis au module 20 de calcul de la moyenne du bruit ambiant, au module 26 de recherche du seuil adapté, et/ou au module de calcul de la fausse alarme 3.

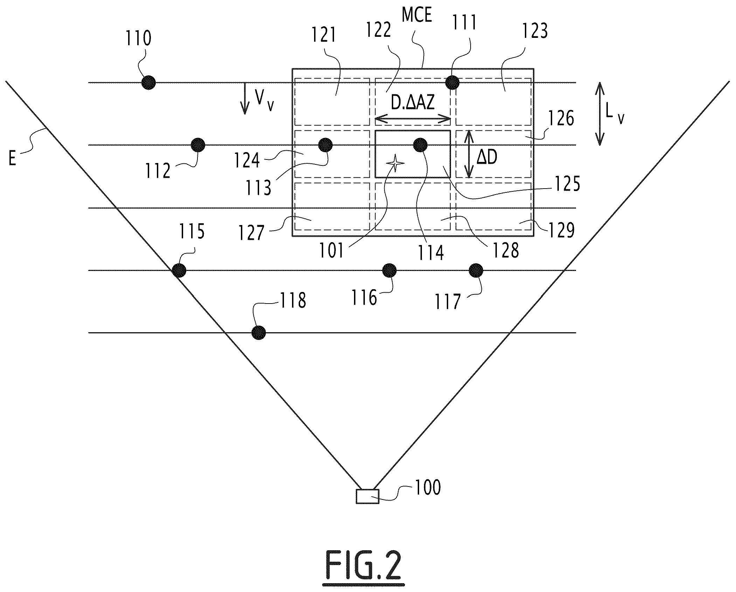

La figure 2 est une représentation schématique de la situation opérationnelle dans laquelle le procédé d'extraction des spikes selon l'invention est mis en œuvre.

Le système radar 100 observe, au cours d'un balayage courant, une zone observée E.

Des objets sont présents dans la zone observée E, qui réfléchissent les ondes émises par le système radar de manière à créer des échos dont la puissance conduit à la génération de plots primaires par l'étage de détection 2 de la chaine de traitement du signal.

Il s'agit par exemple d'une cible 101 et d'une pluralité de spikes (référencé 110 à 118 sur la figure 2).

Le procédé d'extraction de cible, résultant de l'exécution du module 32, applique un traitement dont l'échelle correspond à une macro cellule. Une macro cellule regroupe une pluralité de cellules distance - azimut (ou cases distance - azimut) voisines à l'intérieur du domaine d'observation du système radar.

Les dimensions caractéristiques d'une macro cellule sont notées Δ*D* selon la direction distance et *D.* Δ*AZ* selon la direction en azimut.

Par exemple, sur la figure 2, plusieurs macro cellules ont été représentées : en trait continu, une macro cellule 125 ; et en trait pointillé, des macro cellules 121 à 124 et 126 à 129.

Le procédé d'extraction de cible par intégration tour à tour va maintenant être rappelé en relation avec la figure 3. Le procédé d'extraction est par exemple celui présenté dans le document FR1871763, qui présente l'avantage d'une combinatoire faible et par conséquent une puissance de calcul réduite, particulièrement bien adaptée à une application embarquée.

Ce procédé d'extraction de cible effectue un filtrage cinématique sur la base d'un modèle de déplacement simple des cibles, comme par exemple un modèle de mouvement rectiligne uniforme des cibles.

Le procédé d'extraction de cible prend en entrée la liste L1 des plots primaires à l'instant courant, délivrée en sortie de l'étage de détection 2.

Le module 32 mémorise par ailleurs un historique constitué des listes L1 pour les N-1 instants qui précédent l'instant courant.

Un repère commun est d'abord choisi entre les plots primaires des balayages précédents (soit les N-1 instants précédents) et les plots primaires du balayage courant (soit à l'instant courant).

Les positions des différents plots primaires, acquis aux différents instants, sont ensuite replacées dans ce repère commun, afin de compenser le déplacement de l'aéronef porteur du système radar au cours de N balayages successifs considérés.

Puis, chacun des plots primaires à l'instant courant (c'est-à-dire chacun des plots de la première liste L1 à l'instant courant), det_k, est successivement considéré comme « plot pivot » *piv.*

Avantageusement, pour réduire la charge de calcul, les plots primaires des N-1 balayages précédents sont triés selon leurs positions par rapport à la position du plot pivot *piv.*

Par exemple, on subdivise le domaine d'observation du système radar, ramené dans le repère commun, en une pluralité de macro cellules distance - azimut fixes. C'est ce qui est représenté sur la figure 2.

Ne sont alors retenus que les plots primaires des balayages précédents qui sont situés dans la macro cellule dans laquelle se situe le plot pivot *piv.* Dans ce mode de réalisation, le plot pivot *piv* n'est pas forcément au centre de sa macro cellule.

En variante, un autre critère de regroupement rapide peut être utilisé, comme par exemple la distance entre un plot primaire d'un balayage précédent et le plot pivot *piv.* On ne retient alors que les plots primaires aux instants passés dont la distance est inférieure à une distance de référence.

Un groupe G de plots primaires aux balayages précédents est ainsi créé pour le plot pivot *piv* sous test.

Le graphe A de la partie gauche de la figure 3, qui est un graphe temps T - distance D, représente la distance du plot pivot *piv* à l'instant courant (N) sous test et la distance de chaque plot primaire du groupe G de plots primaires aux balayages précédents, associés à ce plot pivot *piv.* Ces plots sont référencés *det_1 à det_6* sur la figure 3.

Les balayages successifs sont espacés temporellement d'un temps de revisite de la macro cellule, noté Δ*T.* Un graphe similaire pourrait être présenté pour la direction en azimut.

Pour le cas, par exemple, de l'utilisation d'un modèle de mouvement rectiligne uniforme, un plot *det_j* est dit cohérent avec le plot pivot *piv* lorsque ses coordonnées polaires évoluent linéairement dans le temps (avec une incertitude près) : ${D}_{det _ j} = {D}_{piv} + PD ∗ \left({T}_{det _ j}-{T}_{piv}\right) + Δ AZ$ ${AZ}_{det _ j} = {AZ}_{piv} + PAZ ∗ \left({T}_{det _ j}-{T}_{piv}\right) + Δ D$ où : *PD* et *PAZ* sont les coefficients directeurs, ou pentes, respectivement pour la coordonnée de distance *D* et la coordonnée d'azimut *AZ* du plot *det_j* ; les erreurs intrinsèques sur les deux coordonnées sont notées *ΔAZ* et *ΔD* ; et, les instants de détection sont respectivement *T_{det_j}* et *Tₚᵢᵥ.*

Les valeurs de pente, respectivement en distance *PD* et en azimut *PAZ*, sont alors estimées pour chacun des plots du groupe G associé au plot pivot *piv* sous test : $PD = \frac{{R}_{det _ j} - {D}_{piv}}{{T}_{det _ j} - {T}_{piv}} et PAZ = \frac{{AZ}_{det _ j} - {AZ}_{piv}}{{T}_{det _ j} - {T}_{piv}}$

Les valeurs de pente alimentent ou bien un histogramme à une dimension en distance et/ou un histogramme à une dimension en azimut, ou bien un histogramme à deux dimensions en distance et azimut. Ce ou ces histogrammes sont associés au plot pivot *piv* sous test.

Par exemple, le graphe B représenté sur la partie droite de la figure 3 est l'histogramme H_k de pente en distance (homogène à une vitesse radiale) pour le plot pivot *piv (det_k)* du graphe A de la figure 3. L'ordonnée du graphe B est un nombre Nbr de plots. Chaque « bin » (ou intervalle) de l'histogramme H indique donc le nombre de plots du groupe G dont la pente tombe dans le même intervalle.

Une fois l'histogramme H_k construit, une étape de comparaison à un seuil de cible est réalisée.

Par exemple, on considère que, dans le cas où *K* plots primaires sont cohérents entre eux (c'est-à-dire *K*-1 détections *det_j* du groupe G et la détection pivot *piv* sont cohérentes), le plot pivot *piv* est confirmé comme correspondant à une cible. On notera qu'au maximum N plots primaires (un plot par balayage sur l'ensemble de la séquence de N balayages) peuvent être identifiés comme cohérents entre eux.

Ce type d'extracteur est également dénommé extracteur « K/N » à cause de la méthode de seuillage.

Dit autrement, lorsque le nombre de valeurs de pente dans un bin de l'histogramme H_k dépasse un seuil de cible, de valeur K-1, on considère que le plot pivot *piv* sous test correspond à une cible.

Le procédé est itéré (sur l'entier k) pour chaque plot primaire de la liste L1 à l'instant courant. Au moins un histogramme est donc déterminé pour chaque plot primaire de la liste L1 à l'instant courant.

Dans un mode de réalisation binaire, uniquement les plots primaires confirmés comme correspondant à des cibles sont finalement placés dans la liste de cibles L2.

En variante, le module 32 attribue une vraisemblance d'être une cible à chaque plot primaire de la liste L1. Seuls les plots primaires dont la probabilité est supérieure à une valeur seuil prédéfinie sont placés dans la liste de cibles L2.

Le procédé d'extraction de spikes selon l'invention, s'appuie sur des histogrammes de pente.

De manière avantageuse, pour ne pas avoir à les recalculer si un extracteur cinématique est implémenté dans la chaine de traitement et a déjà calculé ces intermédiaires de calcul, les histogrammes de pente en entrée du procédé selon l'invention sont les histogrammes H_k calculés lors de l'exécution du module 32.

La grande majorité des spikes de fouillis de mer est due à la géométrie des vagues provoquant des échos radar de Surface Equivalente Radar - SER largement supérieure à la SER moyenne du fouillis local.

Les spikes de houle peuvent ainsi présenter une SER pouvant aller de 1m² à une cinquantaine de m², i.e. une SER équivalent à celle d'un bateau de petite ou moyenne taille.

Sur la figure 2, un train de vagues lié à la houle est représenté schématiquement par un réseau de lignes. Ce train de houle présente des paramètres caractéristiques comme une vitesse de vague *Vᵥ* et un écart entre vague *Lᵥ* (ou longueur d'onde).

L'extraction de cible par un traitement tour à tour (ou balayage à balayage) permet de différencier une cible et un spike, puisque ces deux objets n'ont pas le même temps de corrélation. On suppose en effet que la puissance d'un spike s'effondre plus rapidement que pour une cible. Par exemple, avec un temps de rafraichissement d'environ 1s, alors qu'un spike n'apparait que sur un petit nombre de tours (typiquement environ trois tours) une cible apparait sur un plus grand nombre de tours (typiquement environ dix tours).

Ainsi, sur un temps d'observation long (plusieurs balayages), les contributions d'une cible ressortent par rapport aux contributions des spikes alentours. Avec l'utilisation d'un extracteur cinématique du type « K/N », les fausses alarmes liées aux spikes sont filtrées et les plots primaires correspondant aux cibles sont confirmés.

Le procédé d'extraction de spikes selon l'invention constitue de préférence un post-traitement des plots primaires qui n'ont pas passés le critère « K/N » de l'extracteur cinématique. Une partie de ces plots primaires correspond à des spikes de fouillis de mer.

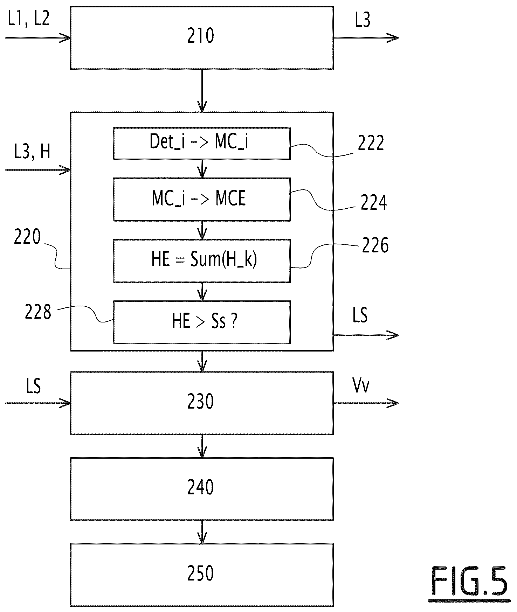

Ainsi, dans le mode de réalisation préféré illustré sur la figure 5, le procédé d'extraction de spike mis en œuvre par le module 34 débute par une étape 210 de soustraction des plots primaires présents dans la liste L2 à l'instant courant, de la liste L1 à l'instant courant. Une liste L3 est ainsi obtenue.

Constatant qu'à l'échelle d'une macro cellule, les spikes ne sont pas suffisamment nombreux pour dépasser un seuil de détection sur un histogramme de pente, le procédé d'extraction de spikes combine les informations des histogrammes de pente de plusieurs plots primaires situés dans une macro cellules étendue, afin de corréler spatialement des spikes issus de plusieurs vagues d'un même front de houle.

Le procédé se poursuit par conséquent par une étape 220, qui prend en entrée, dans le mode de réalisation présenté ici en détail, la liste L3 et l'ensemble H des histogrammes de pente élaborés au cours de l'étape 210, ou tout au moins les histogrammes de pente des détections présentes dans la liste L3.

Chaque plot primaire det_i de la liste L3 est successivement considéré.

Dans l'étape 222, on identifie la macro cellule MC_i à l'intérieur de laquelle est localisé le plot primaire det_i.

Dans l'étape 224, plusieurs macro cellules autour de la macro cellule MC_i sont regroupées dans une macro cellule étendue MCE_i.

Par exemple, comme illustré sur la figure 2, pour le plot primaire 114 situé dans la macro cellule 125, les macro cellules 121 à 129 sont regroupées dans une macro cellule étendue MCE.

Un histogramme combiné HE est alors construit en sommant les histogrammes H_k des plots primaires de la liste L3 qui sont localisés dans la macro cellule étendue MCE. Il s'agit ainsi, dans le mode de réalisation préféré, d'associer plusieurs histogrammes calculés pour différents plots primaires par le module 32.

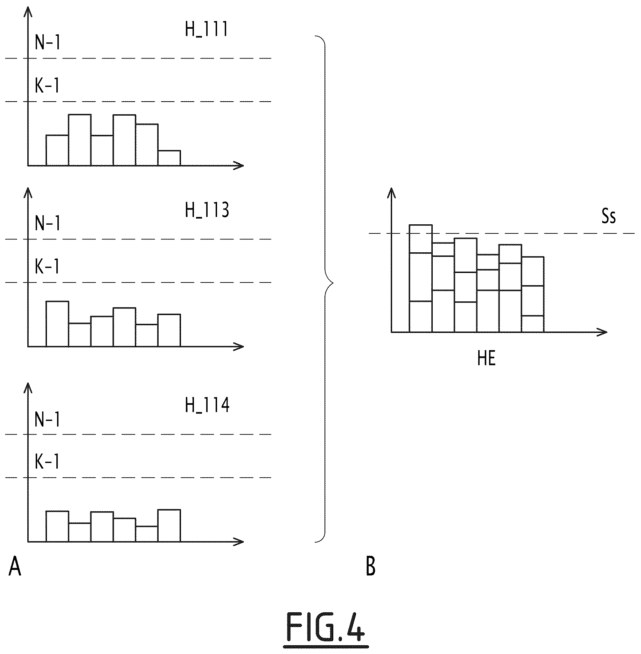

Par exemple, comme illustré sur la figure 4, les histogrammes H_111, H_113 et H_114 (graphes A de la figure 4) pour les plots primaires 111, 113 et 114 situés dans la macro cellule étendue MCE associée au plot 114 sous test, sont accumulés dans l'histogramme combiné HE (graphe B de la figure 4).

Dans une étape 228, une vérification est réalisée en appliquant un seuil de spike Ss sur l'histogramme combiné HE. Ce seuil de spike est prédéfini, mais dépend du nombre d'histogrammes agrégés dans l'histogramme combiné HE.

Le ou chaque plot de la macro cellule étendue MCE qui contribue au bin de l'histogramme combiné HE qui dépasse le seuil de spike Ss est considéré comme un spike.

Ces plots sont placés dans la liste de spikes LS.

L'étape 220 est itérée sur chacun des plots de la liste L3, c'est-à-dire pour chaque macro-cellules étendue construite autour d'un plot de la liste L3.

Ainsi, l'extracteur cinématique de spike est exécuté en parallèle de l'extracteur de cible.

Il est fondé sur la même technique de construction d'histogrammes qu'un extracteur du type cinématique, mais opère sur des macro cellules plus grandes pour faire ressortir le signal qui est dû aux spikes.

En variante, une macro cellule étendue correspond au regroupement des macro cellules uniquement selon la direction en azimut (regroupement des macro cellules 124, 125 et 126 de la figure 2 par exemple) ou uniquement selon la direction en distance (regroupement des macro cellules 122, 125 et 128 de la figure 2 par exemple).

Dans le cas où les histogrammes élémentaires sont élaborés en considérant un critère de distance entre plot pivot et plots à un instant précédent, la notion de macro cellule étendue pour la construction de l'histogramme combiné peut consister à utiliser une distance de référence au plot primaire sous test plus importante, typiquement égale à un multiple entier de la distance de référence, par exemple trois fois la distance de référence, utilisée comme critère de regroupement des plots dans la réalisation des histogrammes élémentaires par l'extracteur de cible.

Avantageusement, le procédé selon l'invention se poursuit par une étape 230 de détermination d'une vitesse Vv et/ou d'une direction de propagation (« heading ») Lv des vagues à partir des histogrammes combinés et des macro cellules étendues associés aux plots de la liste LS.

Cette étape consiste par exemple à calculer la composante de la vitesse d'un spike selon la direction en distance (ou vitesse radiale) et la composante de la vitesse d'un spike selon la direction en azimut (ou vitesse ortho-radiale) à partir de la valeur de pente en distance et de la valeur de pente en azimut du bin de l'histogramme combiné ayant permis de franchir le seuil d'identification de spike.

Ces composantes permettent de remonter à une vitesse vectorielle.

Cette étape consiste ensuite à moyenner les paramètres cinématiques de spike sur un ensemble de spikes voisins, c'est-à-dire apparaissant dans une même zone du domaine d'observation du système radar (une zone couvrant une pluralité de marco-cellules étendues), pour obtenir une information de vitesse de vague moyenne, Vv.

La direction de cette vitesse moyenne donne une estimation de la direction Lv de déplacement des vagues et donc du train de houle dans la zone considérée.

Cette étape permet avantageusement d'établir une cartographie de l'ensemble du domaine d'observation du radar. Cette cartographie donne les paramètres estimés de vitesse et/ou de direction de la houle en chaque point du domaine d'observation.

Alors que l'extraction de spikes s'effectue sur une échelle correspondant à plusieurs macro cellules voisines, l'étape de détermination des paramètres cinématiques de la houle permet d'obtenir une représentation à une échelle globale, c'est-à-dire sur l'ensemble du domaine observé par le système radar.

Avantageusement, le procédé selon l'invention se poursuit par une étape 240 d'estimation de la direction du vent.

Cette étape combine les valeurs des paramètres cinématiques de la houle obtenus en différentes zones du domaine d'observation pour estimer une direction principale du vent dans le domaine d'observation.

Eventuellement, cette direction principale du vent permet de déduire un état de mer en considérant une échelle prédéfinie, comme l'échelle Beaufort.

Pour l'échelle de Beaufort, on peut appliquer la formule suivante pour déterminer le degré Beaufort B : $B = \sqrt[3]{{v}^{2} / 9}$ en faisant l'approximation que la vitesse v du vent est égale à la vitesse de spike la plus élevée mesurée (donc vraisemblablement la vitesse front de vent)

Toujours de manière avantageuse, le procédé selon l'invention se poursuit par une étape 250 consistant à réinjecter les informations obtenues sur les spikes, dans la chaine de traitement. C'est le module 5 qui met en œuvre cette étape.

Ces informations constituent une connaissance *a priori* de la topologie du fouillis de mer.

On peut par exemple diminuer localement les seuils de détection du module 28 afin d'augmenter la capacité de détection des petites cibles.

Par exemple, la connaissance de la vitesse des spikes dans une zone du domaine d'observation permet d'adapter le critère « K/N » pour l'extraction de cible dans cette zone.

Par exemple, on peut baisser le seuil K de l'extracteur de cibles sur les vitesses qui sont différentes de la vitesse de vague ou bien renforcer le seuil K sur les vitesses proches de la vitesse de vague. Dit autrement, un histogramme de pente est pondéré pour pénaliser les bins qui sont proches de la composante correspondante de la vitesse de vague.

Alternativement ou en combinaison, puisque le taux de fausse alarme à considérer est celui à l'entrée du module de pistage de cible, avec le filtrage des plots étiquetés comme étant des spikes, l'extracteur peut accueillir plus de détections en entrée sans saturation, c'est-à-dire que les seuils de détection peuvent être diminués. Cela permet de favoriser la détection de petites cibles.

Si dans le mode de réalisation préféré présenté ci-dessus, le procédé d'extraction cinématique mis en œuvre tests successivement chaque plot primaire à l'instant courant en le considérant comme une détection pivot et en élaborant l'histogramme de pente correspondant (obtenant ainsi autant d'histogrammes que de plots primaires à l'instant courant), d'autres procédés sont connus de l'homme du métier permettant d'obtenir un histogramme de pente.

Par exemple, un histogramme unique peut être construit en accumulant les pentes calculées pour toutes les paires de plots qu'il est possible de considérer dans la séquence de N balayages successifs, une paire associant deux plots obtenus à des balayages différents.

Ce mode de réalisation, qui considère l'ensemble de la combinatoire entre plots, n'est pas si lourd à mettre en œuvre, puisque, pour un nouveau balayage, on reprend les pentes déjà calculées aux balayages précédents entre paires de plots de la séquence de balayages précédents 1 et N-1 et l'on complète en ne calculant que les pentes entre un plot au balayage N courant et chaque plot aux balayages précédents 1 et N-1.

Le seuil de cible est alors appliqué à cet histogramme unique.

Pour l'extraction de spikes, les bins de l'histogramme unique qui dépassent le seul de cible sont d'abord supprimés de l'histogramme unique de chaque macro-cellule à considérer. Puis les différents histogrammes uniques des différentes macro-cellules de la macro-cellule étendue sont accumulés dans un histogramme unique étendu. Le seuil de spike est alors appliqué à cet histogramme unique étendu.

En variante, au lieu de considérer chaque plot de la liste L3, puis de construire la macro-cellule étendue autour de ce plot, le domaine observé par le radar peut être subdivisé en un quadrillage de macro cellules étendue. Un histogramme combiné est alors systématiquement construit pour chaque macro cellules étendue.

Le procédé selon l'invention permet d'optimiser les capacités de détection d'un système radar, notamment fonctionnant à taux de fausses alarmes constant, par l'application de traitements de détection et d'extraction adaptés à des environnements de fouillis variés, à partir d'une identification des spikes de fouillis de mer.

Il permet d'améliorer la détection de cibles de SER faible.

Il permet d'extraire des informations supplémentaires afin d'aider à l'auto-calibration des différents traitements de la chaine de détection.

## Revendications

1. Procédé, mis en œuvre par ordinateur, d'identification de spike dans une liste de plots primaires à l'instant courant (L1), un plot primaire correspondant à une sortie d'un procédé de traitement de détection (2) opérant sur un signal radar (I, Q) délivré par un système radar d'observation maritime, un spike étant un phénomène à la surface de la mer qui donne lieu à un ou plusieurs échos radar puissants, lesdits échos radar conduisant à la génération de plots primaires par le procédé de traitement de détection, le procédé étant **caractérisé en ce qu'**il comporte les étapes de :
- élaborer (210) au moins un histogramme (H_k) de variation temporelle de position pour une pluralité de paires de plots primaires, chaque paire de plots primaires associant un plot primaire courant (det_k) appartenant à la liste de plots primaires à l'instant courant et un plot primaire précédent (det_1 à det_6) appartenant à une liste de plots primaires à un instant précédent, les plots primaires courant et précédent d'une paire de plots primaires étant localisés à l'intérieur d'une macro cellule (125) ;
- pour un plot primaire courant considéré comme « plot primaire sous test », agréger (226), dans un histogramme étendu (HE), les histogrammes (H_k) d'un groupe de plots primaires courants, les plots primaires courants du groupe de plots primaires étant localisés à l'intérieur d'une macro-cellules étendue (MCE) autour du plot primaire sous test ;
- appliquer (228) un critère d'extraction de spike sur l'histogramme étendu, en considérant que lorsqu'un niveau de l'histogramme étendu dépasse un seuil de spike (Ss), le plot primaire sous test est considéré comme un spike ; et,
- placer chaque plot primaire courant considéré comme un spike dans une liste de spikes à l'instant courant (LS).

2. Procédé selon la revendication 1, comportant une étape consistant à appliquer un critère d'extraction de cible sur ledit au moins un histogramme (H_k) de variation temporelle de position, en considérant que, lorsqu'un niveau de l'histogramme dépasse un seuil de cible sur un intervalle de variation temporelle de position, le ou chaque plot primaire courant associé audit intervalle est une cible et à placer chaque plot primaire courant considéré comme une cible dans une liste de cibles à l'instant courant (L3).

3. Procédé selon la revendication 2, **caractérisé en ce qu'**un plot primaire sous test est un plot primaire courant de la liste de plots primaires à l'instant courant qui n'appartient pas à la liste de cibles à l'instant courant.

4. Procédé selon l'une quelconque des revendications 1 à 3, dans lequel l'identification de spike est fondée sur l'hypothèse que les spikes résultent d'un ou plusieurs trains de houle.

5. Procédé selon l'une quelconque des revendications 1 à 4, comportant une étape de filtrage de la liste de cibles à l'instant courant avec la liste de spikes à l'instant courant pour obtenir une liste de plots confirmés (LC).

6. Procédé selon l'une quelconque des revendications 1 à 5, dans lequel chaque plot de la liste de spikes présente une vraisemblance d'être un spike supérieure à un seuil de coupure prédéfini.

7. Procédé selon l'une quelconque des revendications 1 à 6, comportant une étape (230) de détermination d'au moins un paramètre d'un train de houle à partir des plots de la liste de spikes (LS), ledit au moins un paramètre étant une vitesse de vague (Vv) ou une direction de propagation de vague.

8. Procédé selon la revendication 7, comportant une étape (240) de génération d'une cartographie d'un domaine observé par le système radar, ladite cartographie indiquant, pour chaque zone d'une pluralité de zones subdivisant le domaine d'observation du système radar, chaque zone associant une pluralité de macro cellules étendues, une estimation d'un état de mer et/ou un état de vent à partir du ou des paramètres du train de houle déterminés à l'intérieur de ladite zone.

9. Procédé selon l'une quelconque des revendications 1 à 7, dans lequel ledit au moins un histogramme (H_k) de variation temporelle de position est soit un histogramme unidimensionnel selon la direction de distance ou selon la direction en azimut soit un histogramme bidimensionnel selon la direction de distance et la direction en azimut.

10. Programme d'ordinateur comportant des instructions logicielles qui, lorsqu'elles sont exécutées par un calculateur d'un système radar, mettent en œuvre un procédé selon l'une quelconque des revendications précédentes.
